(19) Europäisches Patentamt
European Patent Office
Office européen des brevets

(11) Veröffentlichungsnummer: **0 030 337**
**A2**

(12) **EUROPÄISCHE PATENTANMELDUNG**

(21) Anmeldenummer: **80107442.8**

(22) Anmeldetag: **28.11.80**

(51) Int. Cl.³: **C 09 B 29/50,** C 09 B 69/04, C 09 B 67/26, C 09 B 41/00 // D21H1/46

(30) Priorität: **08.12.79 DE 2949517**

(43) Veröffentlichungstag der Anmeldung: **17.06.81 Patentblatt 81/24**

(84) Benannte Vertragsstaaten: **CH DE FR GB LI**

(71) Anmelder: **BAYER AG, Zentralbereich Patente, Marken und Lizenzen, D-5090 Leverkusen 1, Bayerwerk (DE)**

(72) Erfinder: **Kunde, Klaus, Dr., Uppersberg 66, D-5090 Leverkussen 1 (DE)**

(54) **Monoazofarbstoffe, Verfahren zu deren Herstellung und deren konzentrierte Lösungen.**

(57) Farbstoffe der Formel

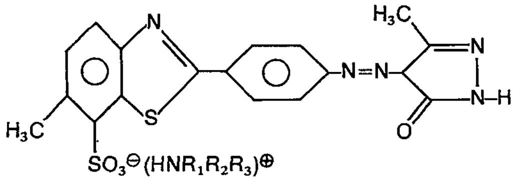

worin $R_1$, $R_2$ und $R_3$ gegebenenfalls substituiertes $C_1$–$C_4$-Alkyl sind, wobei mindestens einer dieser Reste eine Hydroxygruppe enthält, und deren Verwendung zum Färben von Papier. Die Färbungen zeichnen sich durch gute Echtheiten aus.

EP 0 030 337 A2

0030337

BAYER AKTIENGESELLSCHAFT
Zentralbereich
Patente Marken und Lizenzen

5090 Leverkusen-Bayerwerk

My/ABc

BEZEICHNUNG GEÄNDERT
siehe Titelseite

Monoazofarbstoffe und deren Verwendung zum Färben von Papier

---

Gegenstand der vorliegenden Erfindung sind Farbstoffe der allgemeinen Formel

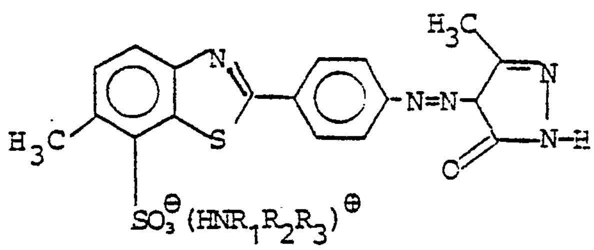

I

worin

$R_1$, $R_2$ und $R_3$ gegebenenfalls substituiertes $C_1$-$C_4$-Alkyl sind, wobei mindestens einer dieser Reste eine Hydroxygruppe enthält,

deren konzentrierte wäßrige Lösungen sowie Verfahren zu deren Herstellung.

Geeignete Reste $R_1$-$R_3$ sind beispielsweise $C_1$-$C_4$-Alkylreste, die durch Hydroxy, $C_1$-$C_4$-Alkoxy oder $C_1$-$C_4$-

Hydroxyalkoxy substituiert sind.

Bevorzugte Lösungen sind solche mit Farbstoffen der allgemeinen Formel I, worin

$R_1$, $R_2$ und $R_3$ Methyl-, Ethyl-, Propylreste und/oder 2-Hydroxyethyl-, 2-Hydroxypropyl-, 3-Hydroxypropyl-, 2,3-Dihydroxypropyl-, 2-Hydroxy-butyl-, 2-(2'-Hydroxyethoxy-)-ethyl-reste sind mit der Maßgabe, daß mindestens einer dieser Reste ein Hydroxyalkylrest ist.

Besonders vorteilhaft sind Lösungen von Farbstoffen der allgemeinen Formel I, worin $R_1$, $R_2$ und $R_3$ 2-Hydroxyethylreste sind.

Die erfindungsgemäßen Präparate sind außergewöhnlich gut in Wasser löslich; die erfindungsgemäßen Lösungen enthalten im allgemeinen etwa 15 Gew.-% bis 30 Gew.-% des Farbstoffs I.

Man erhält die Farbstoffe und deren Lösungen durch Kupplung in Gegenwart von Aminen der Formel

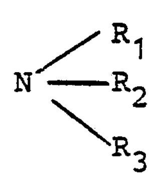

II

Geeignete Amine II sind beispielsweise:

Dimethyl-2-hydroxyethylamin, Methyl-bis-(2-hydroxyethyl-)amin, Tris-(2-hydroxyethyl-)amin, 2-Hydroxyethyl-bis-(2-hydroxypropyl-)amin, 2-Hydroxypropyl-bis-(2-hydroxyethyl-)amin, Tris-(2-hydroxypropyl-)amin, Dimethyl-2-(2'-hydroxyethoxy-)ethylamin, Diethyl-2-(2'-hydroxyethoxy-)ethylamin, Diethyl-2-hydroxyethylamin, Dimethyl-3-hydroxypropylamin, Dimethyl-2-hydroxypropylamin, Diethyl-2-hydroxypropylamin, Methyl-bis-(2-hydroxypropyl-)amin, Tris-[2-(2'-hydroxyethoxy-)ethyl-]amin, Methyl-bis-(2,3-dihydroxypropyl-)amin, Dimethyl-2,3-dihydroxypropylamin, Tris-(2,3-dihydroxypropyl-)amin, Methyl-bis-(2-hydroxybutyl-)amin, Dimethyl-2-hydroxybutylamin, Tris-(2-hydroxybutyl-)amin oder deren Gemische.

Die Farbstoffpräparate sollen praktisch frei von üblichen Metallionen, also insbesondere Alkalimetallionen wie Na-ionen sein. Es ist deshalb darauf zu achten, daß die Kupplungskomponente praktisch frei von solchen Ionen ist.

Man erhält z.B. eine Metallionen-arme Diazoniumverbindung, wenn man die Aminoverbindung in üblicher Weise direkt oder indirekt diazotiert und die entstandene schwerlösliche Diazoniumverbindung in an sich bekannter Weise isoliert und den Rückstand mit Wasser auswäscht oder wenn man die von Metallionen weitgehend befreite Aminoverbindung mit einem Metallionen-freien Nitrosierungsreagenz diazotiert und die so erhaltene Diazoniumverbindung weiterverwendet.

Die Kupplung erfolgt in an sich bekannter Weise, in dem man die Diazonium- und die Kupplungskomponente gemeinsam in Wasser suspendiert und durch Zugabe eines Amins II einen pH-Wert zwischen 3 und 8, vorzugsweise zwischen

6 und 8 einstellt bei einer Temperatur zwischen 0°C und 50°C, vorzugsweise zwischen 20°C und 40°C.

Man erhält ebenfalls erfindungsgemäße Präparate, wenn man die Diazoniumkomponente bei einem pH-Wert zwischen 3 und 8, vorzugsweise zwischen 6 und 8, und bei einer Temperatur zwischen 0°C und 50°C, vorzugsweise zwischen 20°C und 40°C, zu der in Wasser suspendierten Kupplungskomponente zugibt, wobei man das als Kupplungsbase verwendete erfindungsgemäße Amin in der Menge zusetzt, wie es zur Erreichung des gewünschten pH-Wertes nötig ist.

Mit den erfindungsgemäßen Farbstoffen bzw. Farbstofflösungen erhält man unter den üblichen Färbebedingungen auf Papier gelbe Färbungen mit guten Echtheiten.

Beispiel 1

46,4 g 2-(4'-Aminophenyl-)6-methyl-7-benzthiazolsulfonsäure werden bei Raumtemperatur mit 5,8 g Natriumhydroxid in 500 ml Wasser gelöst. Diese Lösung wird mit 10 g Natriumnitrit versetzt und in eine Mischung aus 40 g Salzsäure (30 %ig) und 100 ml Wasser eingetropft, wobei diese Temperatur auf ca. 25°C ansteigt. Zur Vervollständigung der Diazotierung wird noch eine Stunde nachgerührt, dann wird der Nitritüberschuß mit Amidosulfonsäure zerstört. Der entstandene Niederschlag wird abfiltriert und mit 200 ml Wasser gewaschen.

14,2 g 3-Methyl-5-pyrazolon werden zusammen mit der Diazoniumverbindung in 300 ml Wasser bei Raumtemperatur verrührt. Durch langsame Zugabe von insgesamt ca. 25 g Triethanolamin wird ein pH-Wert von 7 ± 0,5 eingestellt, wobei die Temperatur auf ca. 30°C ansteigt. Nach Beendigung der Kupplung wird die erhaltene Lösung gegebenenfalls durch Filtration von einer geringen Menge Feststoff befreit und durch Zugabe von Wasser auf die gewünschte Farbstärke verdünnt.

Beispiel 2

Die wie in Beispiel I hergestellte und isolierte Diazoniumverbindung wird in 100 ml Wasser suspendiert und langsam zu einer Suspension von 14,2 g 3-Methyl-5-pyrazolon in 200 ml Wasser zugegeben, wobei der pH-wert durch Zugabe von insgesamt ca. 25 g Triethanolamin auf 7 ± 0,5 gehalten wird. Die Temperatur steigt

dabei von Raumtemperatur auf ca. 30°C. Nach Beendigung der Kupplung wird die erhaltene Lösung gegebenenfalls durch Filtration von einer geringen Menge Feststoff befreit und durch Zugabe von Wasser auf die gewünschte Farbstärke verdünnt.

Beispiel 3-5

Verwendet man anstelle des in den Beispielen 1 und 2 verwendeten Triethanolamins eine equimolare Menge Methyl-bis-(2-hydroxyethyl-)amin, Tris-(2-hydroxypropyl-)amin oder Tris-/2-(2-hydroxyethoxy-ethyl-7-amin, so erhält man ebenfalls konzentrierte Farbstofflösungen.

Beispiel 6-8

Verwendet man anstelle des in den Beispielen 1 und 2 verwendeten Triethanolamins eine äquimolare Menge eines 1:1-Gemisches (Mol:Mol) von Triethanolamin und Methyl-bis-(2-hydroxyethyl-)amin, oder Triethanolamin und Tris-(2-hydroxypropyl-)amin oder Methyl-bis-(2-hydroxyethyl-)amin und Tris-(2-hydroxypropyl-)amin, so erhält man ebenfalls konzentrierte Farbstofflösungen.

0030337

Patentansprüche

1. Farbstoffe der allgemeinen Formel

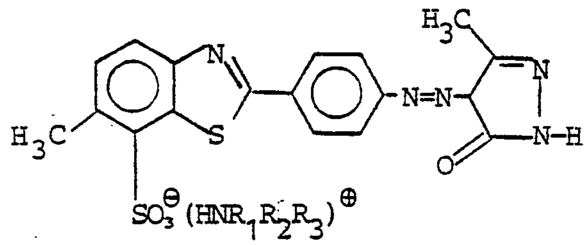

I

worin

$R_1$, $R_2$ und $R_3$ gegebenenfalls substituiertes $C_1$-$C_4$-Alkyl sind, wobei mindestens einer dieser Reste eine Hydroxygruppe enthält.

2. Farbstoffe des Anspruchs 1,dadurch gekennzeichnet daß $R_1$, $R_2$ und $R_3$ =Methyl-, Ethyl-, Propyl und/oder 2-Hydroxyethyl-, 2-Hydroxypropyl-, 3-Hydroxypropyl-, 2,3-Dihydroxypropyl-, 2-Hydroxy-butyl-, 2-(2'-Hydroxyethoxy-)ethyl sind mit der Maßgabe, daß mindestens einer dieser Reste ein Hydroxylalkylrest ist.

3. Farbstoffe der Ansprüche 1-2 mit $R_1$, $R_2$ und $R_3$ = 2-Hydroxyethyl.

4. Verfahren zur Herstellung von Farbstoffen des Anspruchs 1, dadurch gekennzeichnet, daß man ein Diazoniumsalz der Formel

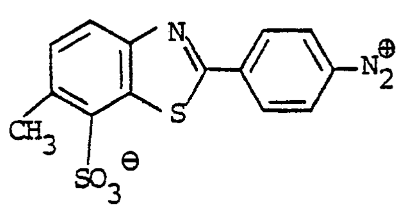

in Gegenwart eines Amins der Formel

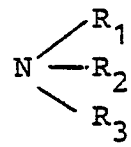

mit 3-Methyl-5-pyrazolon kuppelt.

5. Konzentrierte wäßrige Lösungen von Farbstoffen der Ansprüche 1-3.

6. Verfahren zur Herstellung der Lösungen aus Anspruch 5, dadurch gekennzeichnet, daß man gemäß Anspruch 4 in konzentrierter wäßriger Lösung oder Suspension kuppelt.

7. Verfahren nach Anspruch 6, dadurch gekennzeichnet, daß die Kupplung in Abwesenheit von Metallionen, insbesondere Alkalimetallionen erfolgt.